# EUROPÄISCHE PATENTSCHRIFT

(11) **EP 2 932 085 B1**
(45) Veröffentlichungstag und Bekanntmachung des Hinweises auf die Patenterteilung: **09.08.2017**
(21) Anmeldenummer: 14776847.7
(22) Anmeldetag: 25.09.2014
(51) Int. Cl.: F02M 55/04, F02M 59/44, F04B 11/00, F04B 53/00

(54) **DÄMPFER FÜR EINE HOCHDRUCKPUMPE**
DAMPER FOR A HIGH-PRESSURE PUMP
SILENCIEUX POUR POMPE HAUTE PRESSION

(30) Priorität: 26.09.2013 DE 102013219428
(43) Veröffentlichungstag der Anmeldung: 21.10.2015
(73) Patentinhaber: Continental Automotive GmbH, 30165 Hannover (DE)
(72) Erfinder: KÖHLER, Mario, 01728 Bannewitz (DE); MAUER, Michael, 93059 Regensburg (DE); VOIGT, Peter, L-4970 Bettange-sur-mess (LU); HERDT, Eugenia, 93049 Regensburg (DE); KASPER, Uwe, 58540 Meinerzhagen (DE); KULZER, Stefan, 93199 Beucherling (DE)
(86) Internationale Anmeldenummer: PCT/EP2014/070469
(87) Internationale Veröffentlichungsnummer: WO 2015/044258

(56) Entgegenhaltungen:
- EP-A2- 1 995 446
- DE-A1-102004 002 489
- DE-A1-102011 090 186
- DE-A1-102013 203 507
- JP-A- 2011 117 429
- JP-A- 2011 144 700

## Beschreibung

Die Erfindung betrifft einen Dämpfer für eine Hochdruckpumpe, insbesondere für eine Hochdruckpumpe für ein Kraftstoffeinspritzsystem für eine Brennkraftmaschine.

Hochdruckpumpen, insbesondere eine Hochdruckpumpe für ein Kraftstoffeinspritzsystem eines Kraftfahrzeugs, weisen auf der Niederdruckseite herkömmlich einen Dämpfer auf. Der Dämpfer ist eingerichtet, Druckpulsationen an der Niederdruckseite zu dämpfen. Beispielsweise ist der Dämpfer mit einer Vorförderpumpe beziehungsweise einem Fluidtank zur hydraulischen Kommunikation gekoppelt.

Aufgrund von mechanischen und hydraulischen Vorgängen innerhalb der Hochdruckpumpe entstehen Druckpulsationen. Die Druckpulsationen werden beispielsweise über dünnwandige Bauteile als Körperschall an die Umwelt abgegeben.

Bei einem herkömmlichen Dämpfer wird zur Reduzierung der Schallemissionen beispielsweise eine kreuzförmige Versteifung am Deckel vorgesehen.

DE 10 2011 090 186 A1 offenbart einen Niederdruckdämpfer für Kraftstoffpumpen, der einen wellenförmig ausgebildeten Deckel aufweist.

In EP 1 995 446 A2 ist ein Druckpulsationsdämpfer mit einem Deckel beschrieben, der mehrere konvex gebogene Bereiche aufweist.

JP 2011 144 700 A beschreibt eine Dämpferkammer für eine Hochdruckpumpe mit einem Deckel, der einen kuppelförmig gewölbten Bereich mit daran angeordneten konvex gewölbten Bereichen aufweist.

Es ist wünschenswert, einen Dämpfer für eine Hochdruckpumpe anzugeben, der eine geringe Geräuschabstrahlung ermöglicht.

Gemäß der Erfindung weist ein Dämpfer für eine Hochdruckpumpe ein Gehäuse auf. Der Dämpfer weist einen Deckel auf, der mit dem Gehäuse koppelbar ist, um einen Dämpfungsraum zu bilden. Der Deckel weist eine Erhebung auf. An der Erhebung sind eine Mehrzahl von konkaven Bereichen, die einen Kreissektor des Deckels bilden, und eine Mehrzahl von konvexen Bereichen, die einen Kreissektor des Deckels bilden, ausgebildet. Die konkaven und konvexen Bereiche sind abwechselnd über einen Umfang des Deckels verteilt um einen Mittenbereich der Erhebung herum angeordnet. Jeweils einer der konkaven Bereiche ist zwischen zwei der konvexen Bereiche angeordnet. Die konkaven und konvexen Bereiche sind um den Mittelbereich herum angeordnet, um Schall zu streuen.
Durch die Erhebung mit abwechselnden konkaven und konvexen Bereichen ist der Deckel des Dämpfers steif und widerstandsfähig. Durch die Steifheit wird die Schallbelastung, die vom Dämpfer beziehungsweise der Hochdruckpumpe ausgeht, reduziert. Somit wird eine ausreichend niedrige Geräuschabstrahlung erzielt. Beispielsweise ist eine maximal zulässige Geräuschabstrahlung für die Hochdruckpumpe vorgegeben. Durch die Anordnung von alternierenden konkaven und konvexen Bereichen an der Erhebung des Deckels wird die vorgegebene Geräuschabstrahlung nicht
überschritten. Beispielsweise sind die konkaven und die konvexen Bereiche ringförmig an der Erhebung angeordnet. Gemäß weiteren Ausführungsformen ist eine andere Form der Anordnung möglich, beispielsweise oval oder rechteckig.
Gemäß weiteren Ausführungsformen ist der Mittenbereich konvex oder konkav oder eben ausgebildet. Durch eine konvexe oder konkave Form für den Mittenbereich ist eine besonders niedrige Geräuschemission erreichbar. Ein ebener Mittenbereich ist beispielsweise gut mit einem Namen oder Logo beschriftbar.

Gemäß weiteren Ausführungsformen weist der Deckel einen Mittelpunkt auf, wobei der Mittenbereich von dem Mittelpunkt versetzt angeordnet ist.
Gemäß weiteren Ausführungsformen weist der Mittenbereich eine von einer Kreisform abweichende Form auf. Beispielsweise kann der Mittenbereich eckig, insbesondere dreieckig, ausgebildet sein.

Gemäß weiteren Ausführungsformen sind die konkaven und die konvexen Bereiche gleichmäßig angeordnet. Insbesondere umspannen die Bereiche jeweils einen gleich großen Kreissektor. Es ist auch möglich, dass die konvexen und konkaven Bereiche ungleichmäßig angeordnet sind.

Gemäß weiteren Ausführungsformen umfasst die Mehrzahl von konkaven Bereichen mindestens drei konkave Bereiche. Die Mehrzahl von konvexen Bereichen umfasst beispielsweise mindestens drei konvexe Bereiche. Beispielsweise sind sieben konkave Bereiche und sieben konvexe Bereiche ringförmig um den Mittenbereich angeordnet. Dadurch ist eine gute Reduzierung der Geräuschemission möglich.

Gemäß weiteren Ausführungsformen umspannen die konkaven Bereiche und konvexen Bereiche jeweils unterschiedlich große Kreissektoren. Die konkaven und konvexen Bereiche sind unterschiedlich breit. Insbesondere werden die Anzahl und die Form der konkaven und der konvexen Bereiche in Abhängigkeit einer maximal zulässigen Geräuschabstrahlung vorgegeben.

Gemäß weiteren Ausführungsformen umspannen die konkaven Bereiche zueinander unterschiedlich große Kreissektoren. Das bedeutet, dass die konkaven Bereiche unterschiedlich groß ausgebildet sind.

Alternativ oder zusätzlich umspannen auch die konvexen Bereiche zueinander unterschiedlich große Kreissektoren und sind somit unterschiedlich groß ausgebildet.

Gemäß weiteren Ausführungsformen weist der Deckel in radialer Richtung von dem Mittelbereich ausgehend einen ersten Erhebungsbereich auf, der eine Mehrzahl von konvexen Bereichen und eine Mehrzahl von konkaven Bereich aufweist, die um den Mittenbereich herum angeordnet sind, wobei jeweils einer der konkaven Bereiche zwischen zwei der konvexen Bereich angeordnet ist. Weiter weist der Deckel in radialer Richtung von dem Mittenbereich ausgehend einen zweiten Erhebungsbereich auf, der eine Mehrzahl von konvexen Bereichen oder konkaven Bereichen aufweist, die um den Mittenbereich herum beabstandet zueinander angeordnet sind. Dadurch sind in radialer Richtung von dem Mittenbereich aus gesehen die konvexen und die konkaven Bereich zueinander versetzt angeordnet. Der Deckel kann durch ein zerspanendes Verfahren hergestellt werden. Dadurch lässt sich der Deckel einfach herstellen. Der Deckel kann durch ein spanloses Verfahren hergestellt werden. Der Deckel ist beispielsweise durch ein Umformverfahren hergestellt. Dadurch lässt sich der Deckel effizient herstellen.
Gemäß Ausführungsformen weist der Deckel einen ringförmigen Randbereich auf. Der ringförmige Randbereich ist in einer ersten Ebene angeordnet. Die Erhebung springt bis zu einer zweiten Ebene über den Randbereich vor. Die zweite Ebene ist von der ersten Ebene beabstandet, so dass zwischen dem Mittenbereich und dem Randbereich ein ringförmiger Schrägbereich ausgebildet ist. Die Mehrzahl von konvexen Bereichen und die Mehrzahl von konkaven Bereichen sind jeweils an dem Schrägbereich angeordnet. Wenn der Mittenbereich konvex oder konkav ausgebildet ist, reicht der Mittenbereich bis zu einer dritten Ebene, die von der ersten Ebene und der zweiten Ebene jeweils beabstandet ist.
Weitere Vorteile, Merkmale und Weiterbildungen ergeben sich aus den nachfolgenden in Verbindung mit den Figuren erläuterten Beispielen. Gleiche, gleichartige und gleich wirkende Elemente können dabei mit den gleichen Bezugszeichen versehen sein.

Es zeigen:
Figur 1 eine schematische Darstellung einer Hochdruckpumpe gemäß Ausführungsformen,
Figur 2 eine schematische Darstellung eines Dämpfers gemäß Ausführungsformen,
Figuren 3A bis 3C schematische Darstellungen eines Deckels gemäß Ausführungsformen,
Figur 4 eine Aufsicht auf einen Deckel des Dämpfers gemäß einer weiteren Ausführungsform,
Figur 5 eine Aufsicht auf einen Deckel des Dämpfers gemäß einer weiteren Ausführungsform,
Figur 6 eine Aufsicht auf einen Deckel des Dämpfers gemäß einer weiteren Ausführungsform, und
Figur 7 eine Aufsicht auf einen Deckel des Dämpfers gemäß einer weiteren Ausführungsform.

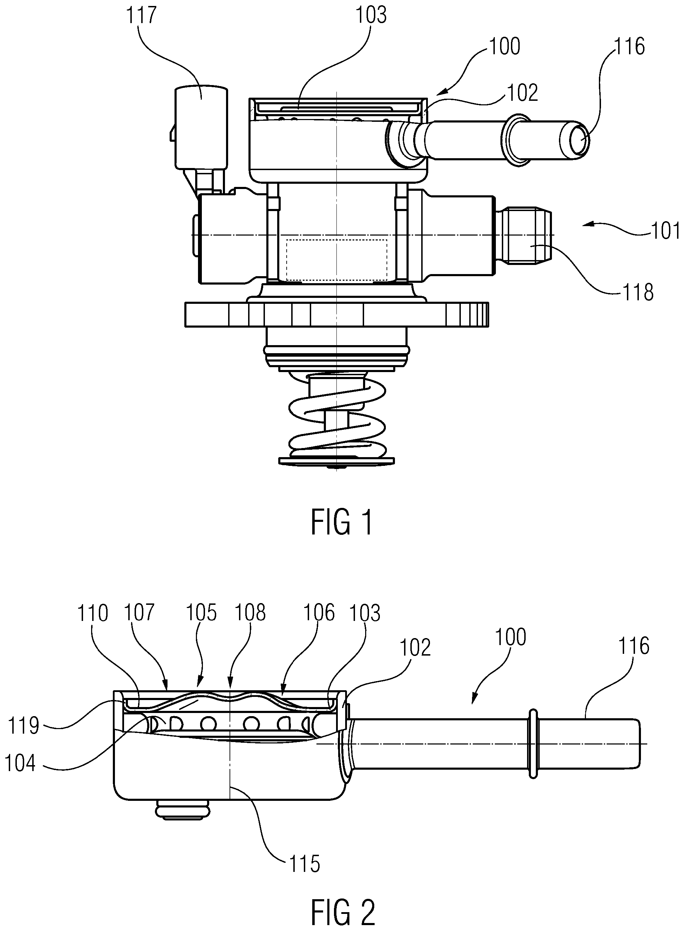

Figur 1 zeigt eine schematische Darstellung einer Hochdruckpumpe 101. Insbesondere ist die Hochdruckpumpe 101 Teil eines Kraftstoffeinspritzsystems einer Brennkraftmaschine eines Kraftfahrzeugs. Die Hochdruckpumpe 101 ist eingerichtet, Fluid aus einem Niederdruckbereich anzusaugen und unter Beaufschlagung eines Drucks in einen Hochdruckbereich zu fördern. Das Fluid ist insbesondere ein Kraftstoff, beispielsweise Benzin oder Diesel. Die Hochdruckpumpe ist eingerichtet, das Fluid mit Drücken von 2500 bar oder mehr zu beaufschlagen. Im Bereich von Hochdruckpumpen für Benzineinspritzsysteme sind beispielsweise Drücke von 500 bar im Hochdruckbereich vorgesehen.

Die Hochdruckpumpe 101 ist mit einem Dämpfer 100 am Fluidzulauf gekoppelt. Der Dämpfer ist mit einem Niederdruckanschluss 116 gekoppelt. Mittels des Niederdruckanschlusses 116 und des Dämpfers 100 kann Fluid in der Saugphase der Pumpe 101 in einen Pumpenzylinder eingesaugt werden. Der Niederdruckanschluss 116 ist beispielsweise mit weiteren Fluidleitungen eines Zulaufs gekoppelt und so hydraulisch mit einem Fluidtank und/oder einer Vorförderpumpe verbunden. Das mit Druck beaufschlagte Fluid gelangt von einen Hochdruckauslasses 118 zu einer Kraftstoffsammelleitung (common rail) oder an Einspritzventile.

Der Dämpfer 100 ist auf der Niederdruckseite angeordnet, an der beispielsweise Drücke von unter 5 bar herrschen. Der Dämpfer 100 ist beispielsweise ein Membrandämpfer. Der Dämpfer 100 ist dazu eingerichtet, Druckpulsationen auf der Niederdruckseite zu dämpfen. Druckpulsationen treten beispielsweise auf, wenn Fluid aus dem Zylinderraum der Hochdruckpumpe 101 bei geöffnetem Einlassventil 117 zurück durch den Niederdruckanschluss 116 in den Niederdruckbereich gefördert wird. Dies ist beispielsweise bei einer Teilförderung der Hochdruckpumpe 101 bei Fördergraden unter 100 % der Fall. Das zurückströmende Fluid kann Druckpulsationen verursachen. Diese werden durch den Dämpfer 100 gedämpft.

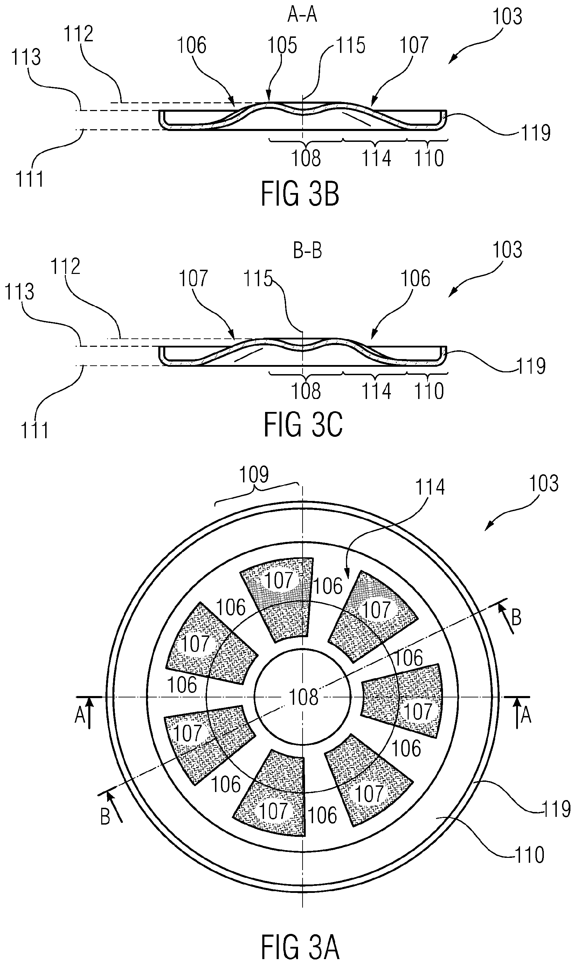

Figur 2 zeigt den Dämpfer 100 gemäß einer Ausführungsform. Der Dämpfer 100 weist ein Gehäuse 102 und einen Deckel 103 auf. Mit dem Gehäuse 102 ist der Niederdruckanschluss 116 gekoppelt. Der Deckel 103 und das Gehäuse 102 bilden einen Dämpfungsraum 104. Der Dämpfungsraum 104 ist im Betrieb mit Fluid gefüllt. In dem Dämpfungsraum 104 ist beispielsweise eine Dämpfungsmembran vorgesehen, um Druckpulsationen des Fluids zu dämpfen.
Der Deckel 103 und das Gehäuse 102 weisen eine Längsachse 115 auf. Insbesondere ist am Schnittpunkt der Längsachse 115 mit dem Deckel 103 ein Mittenbereich 108 angeordnet. Der Deckel 103 weist am Mittenbereich 108 und angrenzend an den Mittenbereich 108 eine Erhebung 105 auf. Die Erhebung 105 springt über einen Randbereich 110 vor. Der Randbereich 110 grenzt im montierten Zustand an das Gehäuse 102 an. Der Randbereich 110 umgibt die Erhebung 105 ringförmig.
An der Erhebung 105 sind eine Mehrzahl von konkaven Bereichen 106 und eine Mehrzahl von konvexen Bereichen 107 angeordnet. Die konkaven Bereichen 106 sind in der Ausrichtung der Figur 2 zurückversetzt angeordnet und die konvexe Bereiche 107 vorspringend. Die konkaven Bereiche 106 und die konvexen Bereiche 107 sind abwechselnd ringförmig um den Mittenbereich 108 angeordnet. In der Ausführungsform gemäß Figur 2 ist der Mittenbereich 108 konkav ausgebildet. Gemäß weiteren Ausführungsformen ist der Mittenbereich 108 konvex oder eben ausgebildet.
Der Deckel 103 ist in den Figuren 3A bis 3C detaillierter dargestellt.
Figur 3A zeigt eine Aufsicht auf den Deckel 103 gemäß Ausführungsformen. Die konkaven Bereiche 106 und die konvexen Bereiche 107 sind abwechselnd um den Mittenbereich 108 ringförmig angeordnet. Jeweils ein konkaver Bereich 106 ist zwischen zwei konvexen Bereichen 107 angeordnet. Jeweils ein konvexer Bereich 107 ist zwischen zwei konkaven Bereichen 106 angeordnet.
Ringförmig um die konkaven Bereiche 106 und die konvexen Bereiche 107 ist der Randbereich 110 angeordnet. Am äußeren Ende des

Randbereichs 110 ist ein Kopplungsbereich 119 angeordnet. Der Kopplungsbereich 119 dient zur Befestigung des Deckels 103 im Gehäuse 102. Beispielsweise ist der Deckel 103 mittels des Kopplungsbereichs 119 in das Gehäuse 102 eingepresst.

Die konkaven und konvexen Bereiche 106 und 107 sind gemäß den dargestellten Ausführungsformen gleichmäßig verteilt um den Mittenbereich 108 herum angeordnet. Gemäß weiteren Ausführungsformen sind die konkaven und konvexen Bereiche 106 und 107 ungleichmäßig um den Mittenbereich 108 angeordnet.

Die konkaven Bereiche 106 und die konvexen Bereiche 107 umspannen jeweils einen Kreissektor 109. In den dargestellten Ausführungsbeispielen sind die Kreissektoren 109 jeweils gleich groß. Die konkaven Bereiche 106 und die konvexen Bereiche 107 sind jeweils gleich breit. Gemäß Ausführungsformen weisen die Bereiche der konkaven Bereiche 106 und der konvexen Bereiche 107 jeweils zueinander unterschiedliche Breiten auf, so dass sie zueinander unterschiedliche Kreissektoren 109 umspannen. Die Form und Ausgestaltung der konkaven und konvexen Bereichen 106 und 107 wird insbesondere in Abhängigkeit von einer maximalen Geräuschabstrahlung vorgegeben.

Im dargestellten Ausführungsbeispiel sind sieben konkave Bereiche 106 und sieben konvexe Bereiche 107 vorgesehen. Es können auch mehr oder weniger als sieben konkave Bereiche 106 und konvexe Bereiche 107 vorgesehen sein. Insbesondere sind jeweils mehr als drei konkave Bereiche 106 und konvexe Bereiche 107 vorgesehen. Die Anzahl der konkaven Bereiche 106 und der konvexen Bereiche 107 wird insbesondere in Abhängigkeit von einer gewünschten Steifheit des Deckels und einer vorgegebenen maximalen Geräuschemission für den Dämpfer 100 beziehungsweise die Hochdruckpumpe 101 vorgegeben.

Wie insbesondere aus den Schnittansichten der Figuren 3B und 3C entlang den Verbindungen AA beziehungsweise BB ersichtlich, sind die konkaven Bereiche 106 und die konvexen Bereiche 107 an einem Schrägbereich 114 angeordnet. Der Schrägbereich 114 erstreckt sich schräg zum Randbereich 110 zwischen dem Randbereich 110 und dem Mittenbereich 108. Der Mittenbereich 108, der Schrägbereich 114, der Randbereich 110 und der Kopplungsbereich 109 sind insbesondere konzentrisch angeordnet.

Der Randbereich 110 ist in einer ersten Ebene 111 angeordnet. Die Erhebung 105 reicht ausgehend vom Randbereich 110 beziehungsweise der erste Ebene 111 bis zu einer zweiten Ebene 112. Die zweite Ebene 112 ist von der ersten Ebene 111 beabstandet. Die zweite Ebene 112 und die erste Ebene 111 sind insbesondere gleichgerichtet beziehungsweise parallel und quer beziehungsweise senkrecht zur Längsachse 115 ausgerichtet.

Die konkave Form des Mittenbereichs 108 im dargestellten Ausführungsbeispiel reicht bis zu einer dritten Ebene 113. Die dritte Ebene 113 ist zwischen der ersten Ebene 111 und der zweiten Ebene 112 angeordnet. In den Ausführungsbeispielen, in denen der Mittenbereich 108 eine konvexe Form aufweist, ist die dritte Ebene 113 weiter von der ersten Ebene 111 beabstandet als die zweite Ebene 112. Entlang der Längsachse 115 ist dann die Reihenfolge der Ebenen: erste Ebene 111, zweite Ebene 112, dritte Ebene 113.

Durch die Anordnung der konkaven und konvexen Bereiche 106 und 107 an der Erhebung 105 wird die wahrnehmbare Geräuschabstrahlung reduziert, die insbesondere durch Insassen des Kraftfahrzeugs oder Passanten der Umgebung des Kraftfahrzeugs wahrnehmbar ist. Zudem wird der Deckel versteift und widerstandsfähig. Durch die Anordnung der konkaven und konvexen Bereiche 106 und 107 an der Erhebung 105 wird durch die Druckpulsationen auftretender Körperschall so gut gestreut, dass er eine vorgegebene Geräuschemission nicht überschritten wird. Der emittierte Schall wird so gut gestreut und in verschiedene Richtungen aufgeteilt, dass die Geräuschemission an einem Punkt relativ zum Dämpfer 100 ausreichend gering ist.

Im gezeigten Ausführungsbeispiel sind abwechselnd sieben konkave und sieben konvexe Bereiche 106 und 107 gleichmäßig über den Umfang verteilt. Dadurch ist im Schnitt ein konvexer Bereich 107 gegenüber einem konkaven Bereich 106 angeordnet.

Gemäß weiteren Ausführungsformen sind die konkaven und die konvexen Bereiche 106 und 107 ungleichmäßig über den Umfang verteilt. Sowohl die konkaven Bereiche 106 als auch die konvexen Bereiche 107 weisen gemäß den dargestellten Ausführungsbeispielen gleiche Winkelgradbreiten auf. Gemäß weiteren Ausführungsformen sind die Winkelgradbreiten unterschiedlich zueinander.

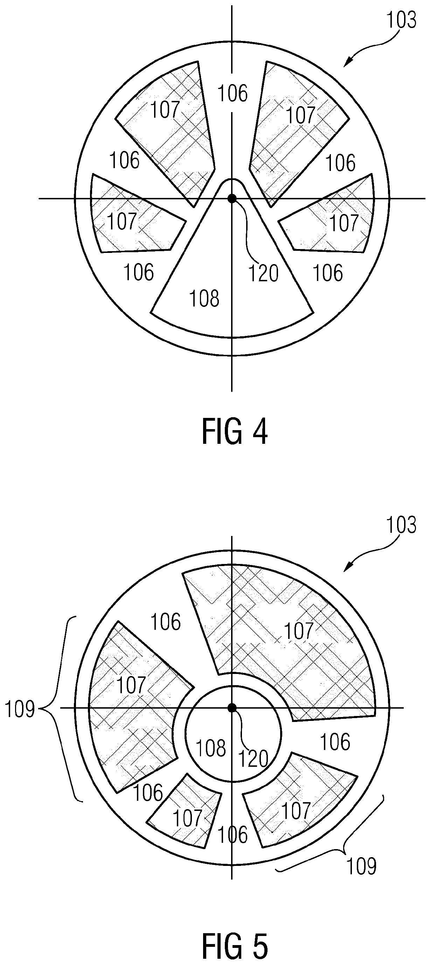

Figur 4 bis Figur 6 zeigen weitere Ausführungsformen des Deckels 103.

In Figur 4 ist der Mittenbereich 108 nicht wie in Figur 3a gezeigt kreisförmig ausgebildet, sondern weist eine Form aus, die von einer Kreisform abweicht. Als Beispiel ist in Figur 4 eine Dreiecksform gezeigt. Es ist jedoch auch möglich, den Mittenbereich als Quadrat, Rechteck oder anderes Vieleck auszubilden.

Figur 5 zeigt eine Ausführungsform des Deckels 103, bei der die konvexen Bereiche 107 zueinander unterschiedlich große Kreissektoren umspannen. Das bedeutet, sie sind unterschiedlich groß ausgebildet. Statt der konvexen Bereich 107 können auch die konkaven Bereiche 106 unterschiedlich große Kreissektoren umspannen. Es ist auch möglich, eine Kombination daraus zu wählen, dass unterschiedlich große konkave Bereiche und unterschiedlich große konvexe Bereiche vorgesehen sind.

Zusätzlich ist in Figur 5 der Mittenbereich 108 zu einem Mittelpunkt 120 des Deckels 103 versetzt angeordnet, so dass insgesamt eine unsymmetrische Anordnung von Mittenbereich 108 und konvexen Bereichen 107 beziehungsweise konkaven Bereichen 106 erzielt wird.

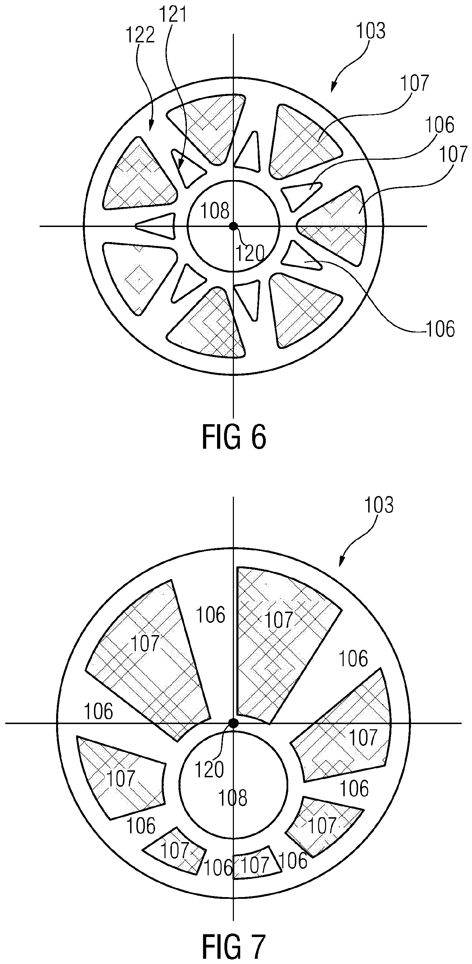

Figur 6 zeigt eine Ausführungsform, bei der die konvexen Bereiche 107 und die konkaven Bereiche 106 versetzt zueinander angeordnet sind. Dabei weist der Deckel 103 in radialer Richtung von dem Mittenbereich 108 ausgehend zwei Bereiche auf, nämlich einen ersten Erhebungsbereich 121 und einen zweiten Erhebungsbereich 122. In dem ersten Erhebungsbereich 121 sind sowohl eine Mehrzahl von konvexen Bereichen 107 als auch eine Mehrzahl von konkaven Bereich 106 vorgesehen, die um den Mittenbereich 108 herum angeordnet sind. Dabei wechseln sich konkave Bereiche 106 und konvexe Bereiche 107 ab, dass heißt jeweils einer der konkaven Bereiche 106 ist zwischen zwei der konvexen Bereich 107 angeordnet. In dem zweiten Erhebungsbereich 122 sind entweder nur konvexe Bereiche 107 oder nur konkave Bereiche 106 vorgesehen, die um den Mittenbereich 108 herum angeordnet sind und einen Abstand zueinander aufweisen. In der in Figur 6 gezeigten Ausführungsform ist der erste Erhebungsbereich 121 näher an dem Mittenbereich 108 angeordnet als der zweite Erhebungsbereich 122, es ist jedoch auch möglich, diese Anordnung umgekehrt vorzusehen.

In Figur 7 ist eine Ausführungsform gezeigt, bei der der Mittenbereich 108 versetzt zu dem Mittelpunkt 120 des Deckels 103 angeordnet ist. Die konvexen Bereiche 107 und die konkaven Bereiche 106 sind in der in Figur 7 gezeigten Ausführungsform gleichmäßig um den Mittenebereich 108 angeordnet. Dadurch weisen sie in radialer Richtung von dem Mittenbereich 108 aus gesehen unterschiedliche Längen auf.

Sämtliche geometrische Anordnungen, die in den Figuren 3a bis 3c und 4 bis 7 dargestellt sind, sind, soweit sterisch nichts dagegen spricht, miteinander kombinierbar.

Der Deckel 103 ist gemäß Ausführungsformen aus einem Metall. Gemäß weiteren Ausführungsformen besteht der Deckel 103 aus einem nicht metallischen Werkstoff. Gemäß Ausführungsformen ist der Mittebereich 108 eben ausgebildet. Beispielsweise ist auf dem ebenen Mittenbereich 108 ein Name oder ein Logo eingeprägt. Die Mehrzahl von konkaven Bereichen 106 kann eine gerade Anzahl als auch eine ungerade Anzahl konkaver Bereiche 106 aufweisen. Die Mehrzahl von konvexen Bereichen 107 kann eine gerade Anzahl als auch eine ungerade Anzahl konvexer Bereiche 107 aufweisen. Der Kopplungsbereich 119 ist gemäß den dargestellten Ausführungsformen nach oben gebogen. Gemäß weiteren Ausführungsformen ist der Kopplungsbereich 119 nach unten gebogen. Alternativ ist der Kopplungsbereich 119 flach auslaufend ausgeführt.

## Patentansprüche

1. Dämpfer für eine Hochdruckpumpe (101), aufweisend:
- ein Gehäuse (102),
- einen Deckel (103), der mit dem Gehäuse (102) koppelbar ist, um einen Dämpfungsraum (104) zu bilden, wobei der Deckel (103) eine Erhebung (105) aufweist und an der Erhebung (105) eine Mehrzahl von konkaven Bereichen (106), die jeweils einen Kreissektor (109) des Deckels (103), und eine Mehrzahl von konvexen Bereichen (107), die jeweils einen Kreissektor (109) des Deckels (103) bilden, ausgebildet sind, wobei die konkaven und konvexen Bereiche (106, 107) abwechselnd über einen Umfang des Deckels (103) um einen Mittenbereich (108) der Erhebung (105) herum angeordnet sind und jeweils einer der konkaven Bereiche (106) zwischen zwei der konvexen Bereichen (107) angeordnet ist, um Schall zu streuen.

2. Dämpfer nach Anspruch 1, bei dem der Mittenbereich (108) konvex oder konkav oder eben ausgebildet ist.

3. Dämpfer nach einem der Ansprüche 1 oder 2, wobei der Deckel (103) einen Mittelpunkt (120) aufweist, wobei der Mittenbereich (108) von dem Mittelpunkt (120) versetzt angeordnet ist.

4. Dämpfer nach einem der Ansprüche 1 bis 3, wobei der Mittenbereich (108) eine von einer Kreisform abweichende Form aufweist.

5. Dämpfer nach einem der Ansprüche 1 bis 4, bei dem die konkaven und die konvexen Bereiche (106, 107) gleichmäßig um den Mittenbereich (108) verteilt angeordnet sind.

6. Dämpfer nach einem der Ansprüche 1 bis 4, bei dem die konkaven und die konvexen Bereiche (106, 107) ungleichmäßig um den Mittenbereich (108) verteilt angeordnet sind.

7. Dämpfer nach einem der Ansprüche 1 bis 6, bei dem die Mehrzahl von konkaven Bereichen (106) mindestens drei konkave Bereiche (106) umfasst und die Mehrzahl von konvexen Bereichen (107) mindestens drei konvexe Bereiche (107) umfasst.

8. Dämpfer nach einem der Ansprüche 1 bis 7, bei dem die Bereiche der Mehrzahl von konkaven Bereichen (106) und die Bereiche der Mehrzahl von konvexen Bereichen (107) jeweils einen gleich großen Kreissektor (109) umspannen.

9. Dämpfer nach einem der Ansprüche 1 bis 7, bei dem die Bereiche der Mehrzahl von konkaven Bereichen (106) und die Bereiche der Mehrzahl von konvexen Bereichen (107) jeweils zueinander unterschiedlich große Kreissektoren (109) umspannen.

10. Dämpfer nach einem der Ansprüche 1 bis 9, wobei die konkaven Bereiche (106) zueinander unterschiedlich große Kreissektoren (109) umspannen und/oder wobei die konvexen Bereiche (107) zueinander unterschiedlich große Kreissektoren (109) umspannen.

11. Dämpfer nach einem der Ansprüche 1 bis 10, wobei der Deckel (103) in radialer Richtung von dem Mittenbereich (108) ausgehend aufweist:
- einen ersten Erhebungsbereich (121), der eine Mehrzahl von konvexen Bereichen (107) und eine Mehrzahl von konkaven Bereichen (106) aufweist, die um den Mittenbereich (108) herum angeordnet sind, wobei jeweils einer der konkaven Bereiche (106) zwischen zwei der konvexen Bereiche (107) angeordnet ist,
- einen zweiten Erhebungsbereich (122), der eine Mehrzahl von konvexen Bereichen (107) oder konkaven Bereichen (106) aufweist, die um den Mittenbereich (108) herum beabstandet zueinander angeordnet sind.

12. Dämpfer nach einem der Ansprüche 1 bis 11, bei dem der Deckel (103) einen ringförmigen Randbereich (110) aufweist, der in einer ersten Ebene (111) angeordnet ist, und die Erhebung (105) bis zu einer zweiten Ebene (112) über den Randbereich (110) vorspring, wobei die zweite Ebene (112) von der ersten Ebene (111) beabstandet ist, so dass zwischen dem Mittenbereich (108) und dem Randbereich (110) ein ringförmiger Schrägbereich (114) ausgebildet ist, und die Mehrzahl von konvexen Bereichen (107) und die Mehrzahl von konkaven Bereichen (106) an dem Schrägbereich (114) angeordnet sind.

13. Dämpfer nach Anspruch 12, bei dem der Mittenbereich (108) bis zu einer dritten Ebene (113) reicht, die von der ersten Ebene (111) und der zweiten Ebene (112) beabstandet ist.

## Claims

1. Damper for a high-pressure pump (101), having:
- a housing (102),
- a cover (103) which can be coupled to the housing (102) in order to form a damping chamber (104), wherein the cover (103) has an elevation (105) and, on the elevation (105), there are formed a multiplicity of concave regions (106), which in each case form a circular sector (109) of the cover (103), and a multiplicity of convex regions (107), which in each case form a circular sector (109) of the cover (103), wherein the concave and convex regions (106, 107) are arranged in an alternating manner over a circumference of the cover (103) around a central region (108) of the elevation (105), and in each case one of the concave regions (106) is arranged between two of the convex regions (107), for the purpose of scattering sound.

2. Damper according to Claim 1, in which the central region (108) is of convex or concave or planar form.

3. Damper according to either of Claims 1 and 2, wherein the cover (103) has a central point (120), wherein the central region (108) is arranged offset with respect to the central point (120).

4. Damper according to one of Claims 1 to 3, wherein the central region (108) has a non-circular shape.

5. Damper according to one of Claims 1 to 4, in which the concave and the convex regions (106, 107) are arranged so as to be distributed uniformly about the central region (108).

6. Damper according to one of Claims 1 to 4, in which the concave and the convex regions (106, 107) are arranged so as to be distributed non-uniformly about the central region (108).

7. Damper according to one of Claims 1 to 6, in which the multiplicity of concave regions (106) comprises at least three concave regions (106) and the multiplicity of convex regions (107) comprises at least three convex regions (107).

8. Damper according to one of Claims 1 to 7, in which the regions of the multiplicity of concave regions (106) and the regions of the multiplicity of convex regions (107) each span a circular sector (109) of equal size.

9. Damper according to one of Claims 1 to 7, in which the regions of the multiplicity of concave regions (106) and the regions of the multiplicity of convex regions (107) each span circular sectors (109) of mutually different size.

10. Damper according to one of Claims 1 to 9, wherein the concave regions (106) span circular sectors (109) of mutually different size, and/or wherein the convex regions (107) span circular sectors (109) of mutually different size.

11. Damper according to one of Claims 1 to 10, wherein the cover (103) has, in the radial direction proceeding from the central region (108):
- a first elevation region (121) which has a multiplicity of convex regions (107) and a multiplicity of concave regions (106) which are arranged around the central region (108), wherein in each case one of the concave regions (106) is arranged between two of the convex regions (107),
- a second elevation region (122) which has a multiplicity of convex regions (107) or concave regions (106) which are arranged spaced apart from one another around the central region (108).

12. Damper according to one of Claims 1 to 11, in which the cover (103) has an annular edge region (110) which is arranged in a first plane (111), and the elevation (105) projects beyond the edge region (110) as far as a second plane (112), wherein the second plane (112) is spaced apart from the first plane (111) such that, between the central region (108) and the edge region (110), there is formed an annular sloping region (114), and the multiplicity of convex regions (107) and the multiplicity of concave regions (106) are arranged on the sloping region (114).

13. Damper according to Claim 12, in which the central region (108) extends as far as a third plane (113) which is spaced apart from the first plane (111) and the second plane (112).

## Revendications

1. Silencieux de pompe haute pression (101), présentant :
- un boîtier (102),
- un couvercle (103) qui peut être accouplé au boîtier (102) afin de former un espace d'amortissement (104), le couvercle (103) présentant un rehaussement (105) et, au niveau du rehaussement (105), une pluralité de régions concaves (106), qui forment à chaque fois un secteur de cercle (109) du couvercle (103), et une pluralité de régions convexes (107), qui forment à chaque fois un secteur de cercle (109) du couvercle (103) étant réalisées, les régions concaves et convexes (106, 107) étant disposées en alternance sur une périphérie du couvercle (103) autour d'une région centrale (108) du rehaussement (105) et à chaque fois l'une des régions concaves (106) étant disposée entre deux des régions convexes (107) afin de dissiper le bruit.

2. Silencieux selon la revendication 1, dans lequel la région centrale (108) est réalisée sous forme convexe ou concave ou sous forme plane.

3. Silencieux selon l'une quelconque des revendications 1 ou 2, dans lequel le couvercle (103) présente un centre (120), la région centrale (108) étant disposée de manière décalée par rapport au centre (120).

4. Silencieux selon l'une quelconque des revendications 1 à 3, dans lequel la région centrale (108) présente une forme s'écartant d'une forme circulaire.

5. Silencieux selon l'une quelconque des revendications 1 à 4, dans lequel les régions concaves et les régions convexes (106, 107) sont disposées de manière répartie uniformément autour de la région centrale (108).

6. Silencieux selon l'une quelconque des revendications 1 à 4, dans lequel les régions concaves et les régions convexes (106, 107) sont disposées de manière répartie non uniformément autour de la région centrale (108).

7. Silencieux selon l'une quelconque des revendications 1 à 6, dans lequel la pluralité de régions concaves (106) comprend au moins trois régions concaves (106), et la pluralité de régions convexes (107) comprend au moins trois régions convexes (107).

8. Silencieux selon l'une quelconque des revendications 1 à 7, dans lequel les régions de la pluralité de régions concaves (106) et les régions de la pluralité de régions convexes (107) couvrent à chaque fois un secteur de cercle (109) de même taille.

9. Silencieux selon l'une quelconque des revendications 1 à 7, dans lequel les régions de la pluralité de régions concaves (106) et les régions de la pluralité de régions convexes (107) couvrent à chaque fois des secteurs de cercle (109) présentant des tailles différentes les uns par rapport aux autres.

10. Silencieux selon l'une quelconque des revendications 1 à 9, dans lequel les régions concaves (106) couvrent des secteurs de cercle (109) présentant des tailles différentes les uns par rapport aux autres et/ou dans lequel les régions convexes (107) couvrent des secteurs de cercle (109) présentant des tailles différentes les uns par rapport aux autres.

11. Silencieux selon l'une quelconque des revendications 1 à 10, dans lequel le couvercle (103) présente, partant de la région centrale (108) dans la direction radiale :
- une première région de rehaussement (121) qui présente une pluralité de régions convexes (107) et une pluralité de régions concaves (106) qui sont disposées autour de la région centrale (108), à chaque fois l'une des régions concaves (106) étant disposée entre deux des régions convexes (107),
- une deuxième région de rehaussement (122) qui présente une pluralité de régions convexes (107) ou de régions concaves (106), qui sont disposées à distance les unes des autres autour de la région centrale (108).

12. Silencieux selon l'une quelconque des revendications 1 à 11, dans lequel le couvercle (103) présente une région de bord de forme annulaire (110) qui est disposée dans un premier plan (111), et le rehaussement (105) fait saillie jusqu'à un deuxième plan (112) au-delà de la région de bord (110), le deuxième plan (112) étant espacé du premier plan (111) de telle sorte qu'entre la région centrale (108) et la région de bord (110) soit réalisée une région oblique de forme annulaire (114) et la pluralité de régions convexes (107) et la pluralité de régions concaves (106) sont disposées sur la région oblique (114).

13. Silencieux selon la revendication 12, dans lequel la région centrale (108) s'étend jusqu'à un troisième plan (113) qui est espacé du premier plan (111) et du deuxième plan (112).
